(19) Europäisches Patentamt
European Patent Office
Office européen des brevets

(11) Veröffentlichungsnummer: **0 316 722 A2**

# (12) EUROPÄISCHE PATENTANMELDUNG

(21) Anmeldenummer: **88118606.8**

(22) Anmeldetag: **09.11.88**

(51) Int. Cl.[4]: **C09B 62/008 , D06P 1/38**

Patentansprüche für folgenden Vertragsstaat: ES.

(30) Priorität: **16.11.87 DE 3738831**

(43) Veröffentlichungstag der Anmeldung: **24.05.89 Patentblatt 89/21**

(84) Benannte Vertragsstaaten: **BE CH DE ES FR GB IT LI**

(71) Anmelder: **HOECHST AKTIENGESELLSCHAFT**
**Postfach 80 03 20**
**D-6230 Frankfurt am Main 80(DE)**

(72) Erfinder: **Springer, Hartmut, Dr.**
**Am Erdbeerstein 27**
**D-6240 Königstein/Taunus(DE)**
Erfinder: **Hussong, Kurt, Dr.**
**Am Flachslad 56**
**D-6233 Kelkheim (Taunus)(DE)**

## (54) Wasserlösliche Azoverbindungen, Verfahren zu ihrer Herstellung und ihre Verwendung als Farbstoffe.

(57) Azoverbindungen entsprechend der allgemeinen Formel

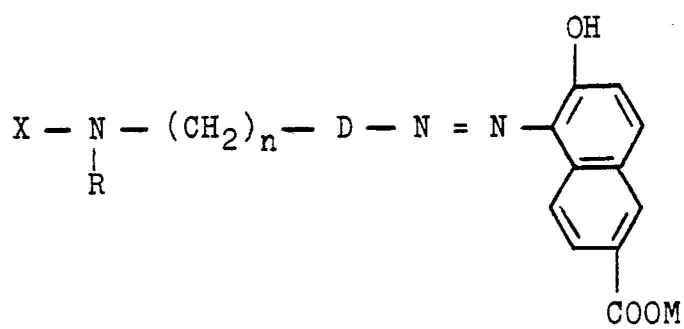

in welcher bedeuten:
D ist para- oder meta-Phenylen, beide gegebenenfalls durch 1 Carboxy oder 1 oder 2 Sulfo substituiert, oder ist Naphthylen mit der Azogruppe in 1- oder 2-Stellung und der Gruppierung $X-N(R)-(CH_2)_n-$ in 5- oder 6-Stellung gebunden und gegebenenfalls durch 1 oder 2 Carboxy oder oder 1 oder 2 Sulfo substituiert;
R ist Wasserstoff oder gegebenenfalls durch Cyano, Carboxy, Sulfo, Sulfato oder Phosphato substituiertes Alkyl von 1 bis 4 C-Atomen;
n ist Null, 1 oder 2;
X ist ein faserreaktiver Diazin-, Triazin-, Pyridin-, Pyrimidin-, Pyridazin-, Thiazin-, Oxazin-, Chinolin-, Phthalazin- oder Phenanthridin-Rest, mit mindestens einem reaktiven Substituenten und gegebenenfalls zusätzlichen anderen Substituenten aus der Gruppe: durch Alkyl- und/oder gegebenenfalls substituierte Arylreste substituierte Ammonium-, Hydrazinium- und Sulfoniumgruppen, Alkylsulfonyl-, Arylsulfonyl-, Azido-, Rhodanido-, Thio-, Alkylthio-, Arylthio-, Alkoxy-, Aryloxy-, Sulfinsäure- oder Sulfonsäuregruppen; X ist ein aliphatischer Reaktivrest;
M ist ein Wasserstoffatom oder Alkalimetall oder das Äquivalent eines zwei- oder dreiwertigen Metalls.
Diese Azoverbindungen besitzen sehr gute faserreaktive Farbstoffeigenschaften und färben hydroxy-

EP 0 316 722 A2

und/oder carbonamidgruppenhaltiges Material, insbesondere Fasermaterial, wie Wolle und insbesondere Cellulose, in farbstarken, echten, klaren Tönen.

# Wasserlösliche Azoverbindungen, Verfahren zu ihrer Herstellung und ihre Verwendung als Farbstoffe

Die Erfindung liegt auf dem technischen Gebiet der faserreaktiven Farbstoffe.

Mit der vorliegenden Erfindung wurden neue, wertvolle faserreaktive Monoazoverbindungen gefunden, die faserreaktive Farbstoffeigenschaften besitzen und der allgemeinen Formel (1)

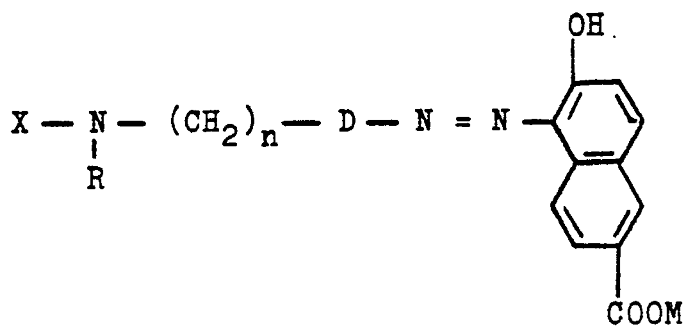

(1)

entsprechen, in welcher bedeuten:

D ist eine para- oder meta-Phenylen-Gruppe, die beide durch 1 Carboxygruppe oder 1 oder 2 Sulfogruppen substituiert sein können, oder ist eine Naphthylengruppe, die in 1- oder 2-Stellung die Azogruppe gebunden enthält und an die in 5- oder 6-Stellung die Gruppierung X-N(R)-$(CH_2)_n$- gebunden ist und die durch 1 oder 2 Carboxygruppen oder 1 oder 2 Sulfogruppen substituiert sein kann;

R ist ein Wasserstoffatom oder eine Alkylgruppe von 1 bis 4 C-Atomen, wie die Methyl- oder Ethylgruppe, oder eine durch eine Cyano-, Carboxy-, Sulfo-, Sulfato- oder Phosphatogruppe substituierte Alkylgruppe von 1 bis 4 C-Atomen, wie beispielsweise die $\beta$-Cyanoethyl-, $\beta$-Carboxyethyl-, $\beta$-Sulfoethyl-, $\beta$-Sulfatoethyl-, $\beta$-Phosphatoethyl- oder Sulfomethyl-Gruppe, bevorzugt hiervon ein Wasserstoffatom und die Methylgruppe;

n ist die Zahl Null, 1 oder 2, bevorzugt Null;

X ist als faserreaktiver Rest der Diazin-, Triazin-, Pyridin=, Pyrimidin-, Pyridazin-, Thiazin-, Oxazin-, Chinolin-, Phthalazin- oder Phenanthridin-Rest, die mindestens einen reaktiven Substituenten enthalten und die zusätzlich durch andere Substituenten, vorzugsweise 1 oder 2 Substituenten substituiert sein können, die aus der Gruppe der folgenden Substituenten:

durch Alkyl- und/oder gegebenenfalls substituierte Arylreste substituierte Ammonium-, Hydrazinium- und Sulfoniumgruppen, Alkylsulfonyl-, Arylsulfonyl-, Azido-, Rhodanido-, Thio-, Alkylthio-, Arylthio-, Alkoxy-, Aryloxy-, Sulfinsäure- oder Sulfonsäuregruppen, wobei deren Alkylreste solche von 1 bis 4 C-Atomen sind und deren gegebenenfalls substituierte Arylreste bevorzugt Phenyl- und Naphthylreste sind, die durch 1, 2 oder 3 Substituenten, bevorzugt aus der Gruppe Alkyl von 1 bis 4 C-Atomen, Alkoxy von 1 bis 4 C-Atomen, Sulfo, Carboxy und Halogen, wie Chlor, substituiert sein können,

ausgewählt sind, oder

X ist ein aliphatischer Reaktivrest;

M ist ein Wasserstoffatom oder ein Alkalimetall oder das Äquivalent eines zwei- oder dreiwertigen Metalls, wie insbesondere des Erdalkalimetalls, wie beispielsweise des Calciums, bevorzugt jedoch ein Wasserstoffatom oder ein Alkalimetall, wie Natrium, Kalium oder Lithium.

Aliphatische Reaktivreste sind beispielsweise die $\beta$-Brom-acryloyl-, $\alpha,\beta$-Dibrom-propionyl-, $\beta$-(Phenylsulfonyl)-propionyl-, $\beta$-(Methylsulfonyl)-propionyl-, $\beta$-Chlor-$\beta$-(phenylsulfonyl)-propionyl-, 2,2,3,3-Tetrafluor-cyclobutan-1-carbonyl-, $\beta$-Chlor-propionyl-, $\beta$-Sulfatoethylsulfonyl-und Vinylsulfonyl-Gruppe.

Von den heterocyclischen Reaktivresten X sind insbesondere die folgenden hervorzuheben: 2-Fluor-5-chlor-pyrimidin-4-yl-, 2-Fluor-5-chlor-6-methyl-pyrimidin-4-yl-, 2-Fluor-5,6-dichlor-pyrimidin-4-yl-, 6-Fluor-2,5-dichlorpyrimidin-4-yl- und insbesondere die 2,4-Dichlor-1,3,5-triazin-6-yl-Gruppe und die 2,6-Difluor-5-chlor-pyrimidin-4-yl-Gruppe.

Die erfindungsgemäßen Azoverbindungen der allgemeinen Formel (1) enthalten bevorzugt mindestens eine Sulfogruppe.

Von den erfindungsgemäßen Azoverbindungen der allgemeinen Formel (1) sind insbesondere bevorzugt solche, in welchen R für ein Wasserstoffatom steht, n die Zahl Null bedeutet, D die meta- oder para-Phenylengruppe, die durch 1 oder 2 Sulfogruppen substituiert sind, ist und M und X die obengenannten, insbesondere bevorzugten Bedeutungen besitzen.

Sulfogruppen sind Gruppen entsprechend der allgemeinen Formel $-SO_3M$ , Carboxygruppen sind Gruppen entsprechend der allgemeinen Formel -COOM , Sulfatogruppen sind Gruppen entsprechend der allgemeinen Formel $-OSO_3M$ und Phosphatogruppen sind Gruppen entsprechend der allgemeinen Formel $-OPO_3M_2$ , in welchen M eine der obengenannten Bedeutungen besitzt.

Die vorliegende Erfindung betrifft weiterhin Verfahren zur Herstellung der Verbindungen der allgemeinen Formel (1), die dadurch gekennzeichnet sind, daß man

a) eine Verbindung der allgemeinen Formel (3)

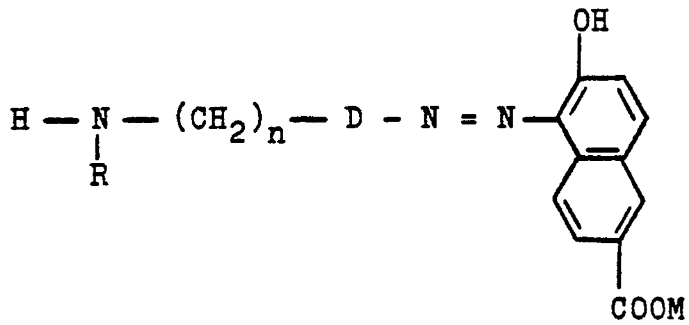

(3)

in welcher R, n, D und M die für Formel (1) genannten Bedeutungen haben (wobei hier im Falle D gleich Naphthylen die Gruppe $H-N(R)-(CH_2)_n-$ in 5- oder 6-Stellung des Naphthylens gebunden ist), in an und für sich bekannter Verfahrensweise mit einer Verbindung der allgemeinen Formel (4)

$X - Z$ (4)

umsetzt, in welcher X die obengenannte Bedeutung besitzt und Z ein als Anion abspaltbarer Substituent, wie insbesondere ein Halogenatom, wie ein Brom- oder Chloratom, ist, oder daß man

b) eine aromatische Aminoverbindung der allgemeinen Formel (5)

$X - N - (CH_2)_n - D - NH_2$ (5)
R

in welcher X, R, n und D die für Formel (1) genannten Bedeutungen haben (wobei hier im Falle D gleich Naphthylen die Aminogruppe $-NH_2$ in 1- oder 2-Stellung des Naphthylens gebunden ist), diazotiert und mit der 2-Naphthol-6-carbonsäure oder einem Salz dieser Carbonsäure kuppelt.

Die Reaktionsbedingungen der Verfahrensweisen a) und b) sind analog bekannten Verfahrensweisen der Acylierung von Aminoverbindungen mit Acylierungsmitteln, wie beispielsweise mit reaktive Halogenatome, wie Fluor- oder Chloratome, enthaltenden Heterocyclen oder Verbindungen mit Carbonsäurechlorid- oder Sulfonsäurechloridgruppen, so in wäßrigem oder wäßrig-organischem Medium (wobei der organische Lösemittelanteil ein unter den Reaktionsbedingungen inertes, bevorzugt wasserlösliches Lösemittel ist, wie beispielsweise Aceton, Dimethylformamid und Dimethylsulfoxid) bei einem pH-Wert zwischen 1 und 8 und einer Temperatur zwischen 0 und 80° C. In gleicher Weise erfolgt die Diazotierungs- und Kupplungsreaktion gemäß der Verfahrensvariante b) in üblicher Weise, so die Diazotierung mittels einem üblichen Nitrosierungsagenz, wie salpetrige Säure, bei einer Temperatur zwischen -5° C und +20° C bei einem pH-Wert von 2 oder kleiner als 2 und die Kupplungsreaktion bei einer Temperatur zwischen 5 und 25° C und einem pH-Wert zwischen 4 und 8, bevorzugt zwischen 5 und 7, jeweils bevorzugt in wäßrigem Medium. Solche Verfahrensweisen sind allgemein in der Literatur oder in Patentveröffentlichungen beschrieben, wie bspw. in den Europäischen Patentanmeldungs-Veröffentlichungen Nrs. 0 078 009A und 0 212 264A.

Die Ausgangsverbindungen der allgemeinen Formeln (3) lassen sich analog bekannten Verfahrensweisen leicht durch Kupplung des diazotierten Amins der allgemeinen Formel (6)

$H - N - (CH_2)_n - D - NH_2$ (6)
R

in welcher R, n und D eine der obengenannten Bedeutungen haben, mit der 2-Hydroxy-naphthalin-6-carbonsäure oder einem Salz dieser Carbonsäure entsprechend den obigen Reaktionsbedingungen der Diazotierung und Kupplung herstellen. Sowohl die Aminoverbindungen der allgemeinen Formel (6) als auch die 2-Naphthol-6-carbonsäure sind allgemein bekannt und zahlreich in der Literatur beschrieben.

Ebenso sind die den faserreaktiven Rest X enthaltenden Ausgangs-Aminoverbindungen der allgemeinen Formel (5) bekannt oder können analog den bekannten Verbindungen durch Umsetzung der entsprechenden Diaminoverbindung der allgemeinen Formel $H-N(R)-(CH_2)_n-D-NH_2$ mit R, n und D der obengenannten Bedeutung mit einer Verbindung der obengenannten und definierten allgemeinen Formel (4) hergestellt

werden.

Ausgangsverbindungen entsprechend der allgemeinen Formel (4) sind beispielsweise 2,6-Difluor-4,5-dichlor-pyrimidin, 2,4-Difluor-5-chlor-pyrimidin, 2,4-Difluor-5-chlor-6-methyl-pyrimidin, 2,4-Difluor-5,6-dichlor-pyrimidin, 4,6-Difluor-2,5-dichlor-pyrimidin, 2,4,6-Trichlor-1,3,5-triazin, β-Brom-acrylsäurechlorid und -bromid, α,β-Dibrom-propionsäurechlorid und -bromid, β-(Phenylsulfonyl)- und β-(Methylsulfonyl)-propionsäurechlorid, β-Chlor-β-(phenylsulfonyl)-propionsäurechlorid, β-Chlor-propionsäurechlorid, 2,2,3,3-Tetrafluor-cyclobutan-1-carbonsäurechlorid und Carbylsulfat.

Ausgangsverbindungen entsprechend der allgemeinen Formel (5) sind beispielsweise 1,4-Diamino-benzol, 1,3-Diamino-benzol, 2-Sulfo-1,4-diamino-benzol, 4-Sulfo-1,3-diamino-benzol, 2,5-Disulfo-1,4-diamino-benzol, 4,6-Disulfo-1,3-diamino-benzol, 4-Carboxy-1,3-diamino-benzol, 3-Carboxy-1,4-diamino-benzol, 3-(Methylamino)-4-sulfo-anilin, 4-(Methylamino)-3-sulfoanilin, 4-Amino-3-sulfo-benzylamin und 1-Amino-(4′-amino-3′-sulfophenyl)-ethan.

Die Abscheidung und Isolierung der erfindungsgemäß hergestellten Azoverbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei der Syntheselösung eine Puffersubstanz zugefügt werden kann.

Die erfindungsgemäßen Azoverbindungen der allgemeinen Formel (1) - im nachfolgenden Verbindungen (1) genannt -haben, wie bereits erwähnt, faserreaktive Farbstoffeigenschaften. Sie können deshalb zum Färben (einschließlich Bedrucken) von hydroxygruppenhaltigen und/oder carbonamidgruppenhaltigen Materialien, insbesondere Fasermaterialien, verwendet werden. Auch können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltige Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane insbesondere in Form von Fasern, beispielsweise Wolle und andere Tierhaare, Seide, Leder, Polyamid-6,6, Polyamid-6, Polyamid-11 und Polyamid-4.

Die Verbindungen lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispielsweise, indem man die Monoazoverbindung der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind sowohl in der Fachliteratur als auch in der Patentliteratur zahlreich beschrieben, wie beispielsweise in den Europäischen Patentanmeldungs-Veröffentlichungen Nrs. 0 078 009 A und 0 181 585A.

Mit den Verbindungen (1) werden sowohl auf carbonamidgruppenhaltigen Materialien, wie insbesondere auf Wolle, als auch auf hydroxygruppenhaltigem Material, wie insbesondere Cellulosefasermaterial, Färbungen und Drucke mit hoher Farbausbeute und gutem Farbaufbau erhalten, wobei der brillante Farbton auch in tiefen Tönen erhalten bleibt. Die Färbungen und Drucke besitzen gute Echtheitseigenschaften, wie gute Licht- und Naßechtheitseigenschaften und eine gute Plissierechtheit, Bügelechtheit und Reibechtheit.

Von den Färbungen und Drucken auf carbonamidgruppenhaltigem Material, wie insbesondere auf Wolle, können die Licht-, Wasch- und Naßlichtechtheiten hervorgehoben werden, selbst wenn auf eine ansonsten übliche ammoniakalische Nachbehandlung der gefärbten Ware verzichtet wird. Ebenso läßt sich Material aus Wollfasern unterschiedlicher Provinienz mit den erfindungsgemäßen Azoverbindungen egal färben, wobei gegebenenfalls zur Verbesserung des Egalisierverhaltens ein übliches Egalisierhilfsmittel, wie beispielsweise N-Methyl-taurin zugesetzt werden kann.

Bevorzugt dienen die Verbindungen (1) zum Färben von Cellulosefasermaterialien. Von den hierauf erzielbaren guten Echtheitseigenschaften sind insbesondere die guten Waschechtheiten bei 60 bis 95° C, auch in Gegenwart von Perboraten, die sauren und alkalischen Walk-, Überfärbe-und Schweißechtheiten,

die hohe Dampfbeständigkeit, die guten Säure-, Wasser- und Seewasserechtheiten zu erwähnen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die im sichtbaren Bereich angegebenen Absorptionsmaxima ($\lambda_{max}$-Werte) wurden aus wäßriger Lösung der Alkalimetallsalze bestimmt.

**Beispiel 1**

184,4 Teile Cyanurchlorid werden in 2000 Teilen Wasser unter Zusatz eines Dispergiermittels suspendiert. Man rührt sodann eine Lösung aus 268,1 Teilen 1,4-Diaminobenzol-2,5-disulfonsäure in 3000 Teilen Wasser hinzu, stellt nach Kühlung auf 0 bis 3° C mit wäßriger Natronlauge einen pH-Wert zwischen 4,5 und 5 ein und hält diesen pH-Bereich während der Umsetzungszeit von etwa 3 Stunden. Das erhaltene Monokondensationsprodukt wird anschließend nach Zugabe von 150 Volumenteilen einer konzentrierten wäßrigen Salzsäure mittels 200 Volumenteilen einer wäßrigen 5n-Natriumnitrit-Lösung diazotiert. Überschüssiges Nitrit wird danach in üblicher Weise mit Amidosulfonsäure zerstört.

Zu dieser Diazoniumsalzlösung gibt man eine neutrale Lösung von 188,1 Teilen 2-Naphthol-6-carbonsäure in 3000 Teilen Wasser, stellt den pH mittels Natriumbicarbonat auf einen Wert zwischen 5,5 und 6 und isoliert nach beendeter Kupplungsreaktion die bereits teilweise ausgefallene erfindungsgemäße Azoverbindung quantitativ durch Ausfällung mit Natriumchlorid und Filtration

Man erhält ein rotoranges, elektrolytsalz-haltiges Pulver des Natriumsalzes der Verbindung der Formel

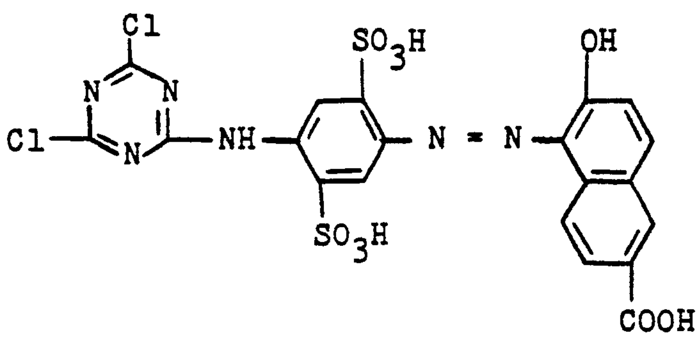

($\lambda_{max}$ = 490 nm)

die sehr gute Farbstoffeigenschaften, insbesondere sehr gute faserreaktive Farbstoffeigenschaften besitzt und auf den in der Beschreibung genannten Materialien, wie insbesondere Cellulosefasermaterialien, wie beispielsweise Baumwolle, nach den in der Technik üblichen Applikations-und Fixiermethoden, insbesondere den für faserreaktive Farbstoffe beschriebenen Färbe- und Druckverfahren, farbstarke, klare orange Färbungen und Drucke von guten Lichtechtheiten und guten Naßechtheitseigenschaften, wie insbesondere guten Wasch-, Walk-, Schweiß- und Überfärbeechtheiten, liefert.

**Beispiel 2**

Man rührt eine Lösung von 184.Teilen Cyanurchlorid in 1000 Teilen Aceton in 3000 Teile zerstoßenes Eis ein und gibt anschließend unter Rühren eine neutrale Lösung des Natriumsalzes von 268 Teilen 1,3-Diaminobenzol-4,6-disulfonsäure in 2000 Teilen Wasser unter Einhaltung einer Reaktionstemperatur von 8 bis 12° C und eines pH-Wertes zwischen 5 und 6 hinzu. Man rührt den Ansatz unter diesen Temperatur-und pH-Bedingungen zur Vervollständigung der Reaktion noch etwa 3 Stunden nach.

Die Lösung wird anschließend auf 0 bis 5° C abgekühlt, mit 360 Teilen einer wäßrigen konzentrierten Salzsäure versetzt und das Monokondensationsprodukt durch langsame Zugabe von 200 Volumenteilen einer wäßrigen 5n-Natriumnitrit-Lösung diazotiert. Man rührt danach noch etwa 30 Minuten nach und zerstört überschüssige salpetrige Säure in üblicher Weise. Zu dieser Diazoniumsalzlösung gibt man sodann eine neutrale Lösung von 188,1 Teilen 2-Naphthol-6-carbonsäure in 3000 Teilen Wasser und führt die Kupplungsreaktion unter Einhaltung eines pH-Wertes zwischen 5,5 und 6 und einer Temperatur von 15 bis 20° C zu Ende.

Die erhaltene erfindungsgemäße Monoazoverbindung wird durch Aussalzen mit Kaliumchlorid und Abfiltration aus der Syntheselösung isoliert. Es wird ein elektrolyt-haltiges, wie kaliumchlorid-haltiges, Pulver des Alkalimetallsalzes, vorwiegend Kaliumsalzes, der Verbindung der Formel

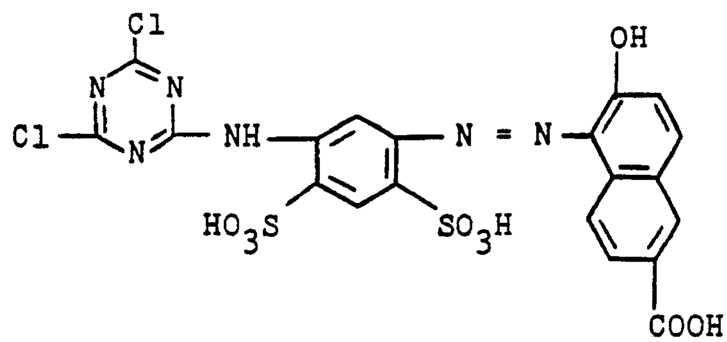

($\lambda_{max}$ = 478 nm)

erhalten. Diese erfindungsgemäße Monoazoverbindung besitzt ebenfalls sehr gute Farbstoffeigenschaften und färbt beispielsweise Cellulosefasermaterialien und insbesondere Wolle, wie auch filzarm ausgerüstete Wolle, nach den für faserreaktive Farbstoffe üblichen und bekannten Applikations- und Fixiermethoden in brillanten orangen Tönen mit sehr guten Licht- und Naßechtheiten, wie beispielsweise einer sehr guten alkalischen Schweißechtheit und einer guten Waschechtheit bei 60° C.

**Beispiel 3**

Zu einer neutralen Lösung von 0 bis 5° C von 20,4 Teilen 1,4-Diaminobenzol-2,5-disulfonsäure in 300 Teilen Wasser gibt man langsam unter gutem Rühren innerhalb von 30 Minuten 16,9 Teile 2,4,6-Trifluor-5-chlor-pyrimidin und hält während der Umsetzung den pH-Wert bei 6 bis 6,5 durch Zugabe einer wäßrigen 15%igen Natriumcarbonatlösung. Nach Beendigung der Monokondensationsreaktion löst man in dieser Syntheselösung 7 Teile Natriumnitrit und läßt sie sodann in eine wäßrige Salzsäure (aus 28 Volumenteilen einer konzentrierten Salzsäure und 500 Teilen Eiswasser) unter gutem Rühren einlaufen. Man rührt eine Stunde nach und entfernt überschüssiges Nitrit in üblicher Weise.

Zu dieser Diazoniumsalzlösung gibt man eine Lösung mit einem pH-Wert von 7 von 18,9 Teilen 2-Naphthol-6-carbonsäure in 300 Teilen Wasser, wobei man den pH-Wert zwischen 5,5 und 6,5 mittels einer wäßrigen 15%igen Natriumcarbonatlösung hält. Nach beendeter Kupplungsreaktion wird die erfindungsgemäße Azoverbindung mittels Kaliumchlorid ausgesalzen und isoliert.

Man erhält ein rotoranges, elektrolytsalz-haltiges (vorwiegend kaliumchlorid-haltiges) Pulver des Kaliumsalzes der Verbindung der Formel

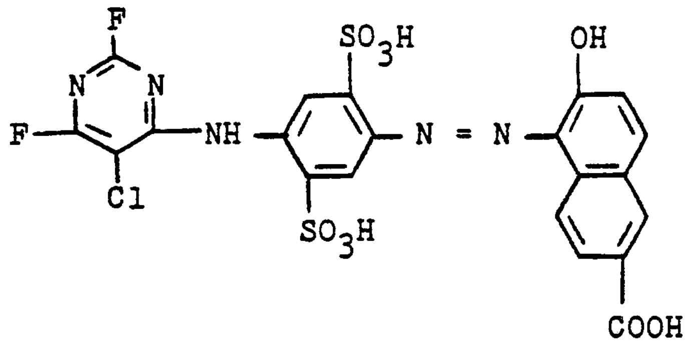

($\lambda_{max}$ = 488 nm).

Diese erfindungsgemäße Azoverbindung zeigt sehr gute Farbstoffeigenschaften, insbesondere sehr gute faserreaktive Farbstoffeigenschaften, und liefert auf den in der Beschreibung genannten Materialien, wie insbesondere Cellulosefasermaterialien, wie beispielsweise Baumwolle, nach den in der Technik üblichen Applikations- und Fixiermethoden, insbesondere den für faserreaktive Farbstoffe beschriebenen Färbe- und Druckverfahren, farbstarke, klare orange Färbungen und Drucke von guten Licht- und Naßechtheitseigenschaften, wie beispielsweise guten Wasch-, Walk-, Schweiß- und Überfärbeechtheiten.

**Beispiel 4**

Man versetzt eine Lösung von 20,2 Teilen 4-Methylamino-2-sulfo-anilin in 300 Teilen Wasser bei einer Temperatur zwischen 0 und 5 °C zunächst mit 28 Teilen einer wäßrigen 31%igen Salzsäure und anschließend mit 20 Teilen einer wäßrigen 5n-Natriumnitritlösung und führt die Reaktion durch 30-minütiges Nachrühren zu Ende. Überschüssiges Nitrit wird in üblicher Weise zerstört. Zu dieser Diazoniumsalzlösung gibt man langsam unter Einhaltung eines pH-Wertes von 5 bis 6 mittels Natriumbicarbonat und einer Temperatur von 10 bis 15 °C eine neutrale Lösung aus 18,9 Teilen 2-Naphthol-6-carbonsäure in 200 Teilen Wasser. Zur Beendigung der Kupplungsreaktion rührt man noch eine Weile nach und gibt diesen Syntheseansatz unter gutem Rühren in ein Gemisch aus 18,4 Teilen Cyanurchlorid und 200 Teilen Eis/Wasser, rührt den Ansatz bei 5 bis 10 °C und unter Einhaltung eines pH-Wertes zwischen 5 und 6 noch etwa 4 Stunden nach und isoliert anschließend die hergestellte erfindungsgemäße Azoverbindung durch Aussalzen mit Kaliumchlorid.

Man erhält ein orangerotes elektrolythaltiges Pulver des Alkalimetallsalzes, vorwiegend Kaliumsalzes, der Verbindung der Formel

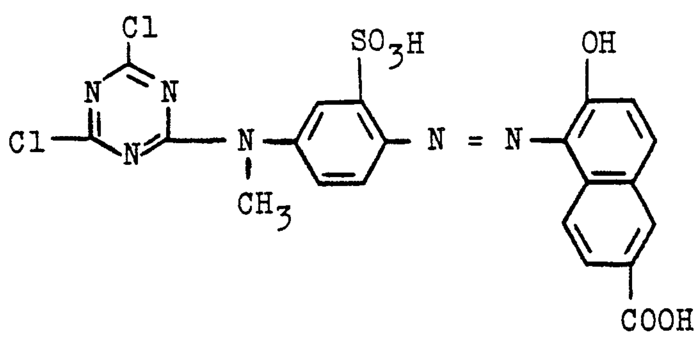

($\lambda_{max}$ = 478 nm)

die sehr gute Farbstoffeigenschaften besitzt und Cellulosefasermaterialien und insbesondere Wolle, auch filzarm ausgerüstete Wolle, nach den für faserreaktive Farbstoffe üblichen und bekannten Applikations- und Fixiermethoden in brillanten, orangen Tönen mit guten Licht- und Naßechtheitseigenschaften, wie beispielsweise einer guten alkalischen Schweißechtheit und einer guten Waschechtheit bei 60 °C, färbt.

**Beispiele 5 bis 51**

In den nachfolgenden Tabellenbeispielen sind weitere erfindungsgemäße Monoazoverbindungen entsprechend der allgemeinen Formel (1) mit Hilfe ihrer Komponenten beschrieben. Sie lasen sich in erfindungsgemäßer Weise, wie beispielsweise nach einer der in den Beispielen 1 bis 4 beschriebenen Verfahrensweise, aus den entsprechenden Ausgangsverbindungen (der 2-Naphthol-6-carbonsäure als Kupplungskomponente, dem Amin der allgemeinen Formel (6) als Diazokomponente und einer halogenhaltigen heterocyclischen Verbindung als Reaktivkomponente der allgemeinen Formel (4) bzw. dem Kondensationsprodukt entsprechend der allgemeinen Formel (5) aus dieser Reaktivkomponente (4) mit dem Amin der allgemeinen Formel (6) als Diazokomponente) herstellen. Sie zeigen sehr gute Farbstoffeigenschaften und liefern auf den in der Beschreibung genannten Materialien, wie insbesondere Cellulosefasermaterialien, beispielsweise Baumwolle, und ebenfalls auf Wolle farbstarke Färbungen und Drucke mit guten Echtheitseigenschaften mit dem in dem jeweiligen Tabellenbeispiel angegebenen Farbton (dort für eine Baumwollfärbung).

| Bsp. | Ausgangs-Verbindung (6) | Ausgangs-Verbindung (4) | Monoazoverbindung (1) Rest X- | Rest $-N(R)-(CH_2)_n-D-$ | Farbton ($\lambda_{max}$=...nm) |
|---|---|---|---|---|---|
| 5 | 1,3-Diamino-benzol-4,6-di-sulfonsäure | 2,4-Difluor-5,6-dichlor-pyrimidin | 2-Fluor-5,6-dichlor-pyrimidin-4-yl | 4,6-Disulfo-1,3-phenylen | rotorange |
| 6 | dito | 4,6-Difluor-2,5-dichlor-pyrimidin | 6-Fluor-2,5-dichlor-pyrimidin-4-yl | dito | rotorange |
| 7 | dito | 2,4-Difluor-5-chlor-6-methyl-pyrimidin | 2-Fluor-5-chlor-6-methyl-pyrimidin-4-yl | dito | rotorange |
| 8 | dito | 4,6-Difluor-5-chlor-2-methyl-pyrimidin | 6-Fluor-5-chlor-2-methyl-pyrimidin-4-yl | dito | rotorange |
| 9 | dito | 2,4,6-Trifluor-5-chlor-pyrimidin | 2,6-Difluor-5-chlor-pyrimidin-4-yl | dito | rotorange |
| 10 | 1,4-Diamino-benzol-2,5-di-sulfonsäure | 2,4-Difluor-5,6-dichlor-pyrimidin | 2-Fluor-5,6-dichlor-pyrimidin-4-yl | 2,5-Disulfo-1,4-phenylen | rotorange |
| 11 | dito | 4,6-Difluor-2,5-dichlor-pyrimidin | 6-Fluor-2,5-dichlor-pyrimidin-4-yl | dito | rotorange |
| 12 | dito | 2,4-Difluor-5-chlor-6-methyl-pyrimidin | 2-Fluor-5-chlor-6-methyl-pyrimidin-4-yl | dito | rotorange |

| Bsp. | Ausgangs-Verbindung (6) | Ausgangs-Verbindung (4) | Monoazoverbindung (1) Rest X- | Rest $-N(R)-(CH_2)_n-D-$ | Farbton ($\lambda_{max}$=...nm) |
|---|---|---|---|---|---|
| 13 | dito | 4,6-Difluor-5-chlor-2-methyl-pyrimidin | 6-Fluor-5-chlor-2-methyl-pyrimidin-4-yl | dito | rotorange |
| 14 | 1,3-Diamino-benzol-4-sulfonsäure | 2,4-Difluor-5,6-dichlor-pyrimidin | 2-Fluor-5,6-dichlor-pyrimidin-4-yl | 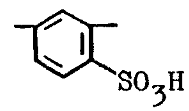 | orange |
| 15 | dito | 4,6-Difluor-2,5-dichlor-pyrimidin | 6-Fluor-2,5-dichlor-pyrimidin-4-yl | dito | orange |
| 16 | dito | 2,4-Difluor-5-chlor-6-methyl-pyrimidin | 2-Fluor-5-chlor-6-methyl-pyrimidin-4-yl | dito | orange |
| 17 | dito | 4,6-Difluor-5-chlor-2-methyl-pyrimidin | 6-Fluor-5-chlor-2-methyl-pyrimidin-4-yl | dito | orange |
| 18 | dito | 2,4,6-Trifluor-5-chlor-pyrimidin | 2,6-Difluor-5-chlor-pyrimidin-4-yl | dito | orange |
| 19 | dito | 2,4,6-Trichlor-s-triazin | 2,6-Dichlor-s-triazin-4-yl | dito | orange |
| 20 | 1,4-Diamino-benzol-2-sulfonsäure | 2,4-Difluor-5,6-dichlor-pyrimidin | 2-Fluor-5,6-dichlor-pyrimidin-4-yl | 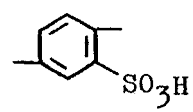 | orange |
| 21 | dito | 4,6-Difluor-2,5-dichlor-pyrimidin | 6-Fluor-2,5-dichlor-pyrimidin-4-yl | dito | orange |

| Bsp. | Ausgangs-Verbindung (6) | Ausgangs-Verbindung (4) | Monoazoverbindung (1) Rest X- | Rest $-N(R)-(CH_2)_n-D-$ | Farbton ($\lambda_{max}$=...nm) |
|---|---|---|---|---|---|
| 22 | dito | 2,4-Difluor-5-chlor-6-methyl-pyrimidin | 2-Fluor-5-chlor-6-methyl-pyrimidin-4-yl | dito | orange |
| 23 | dito | 4,6-Difluor-5-chlor-2-methyl-pyrimidin | 6-Fluor-5-chlor-2-methyl-pyrimidin-4-yl | dito | orange |
| 24 | dito | 2,4,6-Trifluor-5-chlor-pyrimidin | 2,6-Difluor-5-chlor-pyrimidin-4-yl | dito | orange |
| 25 | dito | 2,4,6-Trichlor-s-triazin | 2,6-Dichlor-s-triazin-4-yl | dito | orange |
| 26 | 3-Methylamino-4-sulfo-anilin | 2,4-Difluor-5,6-dichlor-pyrimidin | 2-Fluor-5,6-dichlor-pyrimidin-4-yl | 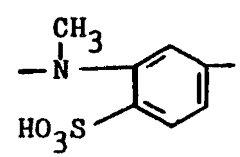 | rotorange |
| 27 | 3-Methylamino-4-sulfo-anilin | 4,6-Difluor-2,5-dichlor-pyrimidin | 6-Fluor-2,5-dichlor-pyrimidin-4-yl | dito | rotorange |
| 28 | dito | 2,4-Difluor-5-chlor-6-methyl-pyrimidin | 2-Fluor-5-chlor-6-methyl-pyrimidin-4-yl | dito | rotorange |
| 29 | dito | 4,6-Difluor-5-chlor-2-methyl-pyrimidin | 6-Fluor-5-chlor-2-methyl-pyrimidin-4-yl | dito | rotorange |

| Bsp. | Ausgangs-Verbindung (6) | Ausgangs-Verbindung (4) | Monoazoverbindung (1) Rest X- | Rest $-N(R)-(CH_2)_n-D-$ | Farbton ($\lambda_{max}$=...nm) |
|---|---|---|---|---|---|
| 30 | dito | 2,4-Dichlor-6-(2',5'-disulfo-phenyl)-amino-s-triazin | 2-Chlor-6-(2',5'-disulfo-phenyl)-amino-s-triazin-4-yl | dito | rotorange |
| 31 | dito | 2,4,6-Trifluor-5-chlor-pyrimidin | 2,6-Difluor-5-chlor-pyrimidin-4-yl | dito | rotorange |
| 32 | dito | 2,4,6-Trichlor-s-triazin | 2,6-Dichlor-s-triazin-4-yl | dito | rotorange |
| 33 | 4-Methylamino-2-sulfo-anilin | 2,4-Difluor-5,6-dichlor-pyrimidin | 2-Fluor-5,6-dichlor-pyrimidin-4-yl | 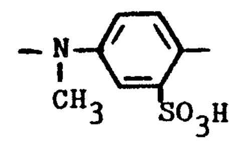 | rotorange |
| 34 | dito | 4,6-Difluor-2,5-dichlor-pyrimidin | 6-Fluor-2,5-dichlor-pyrimidin-4-yl | dito | rotorange |
| 35 | dito | 2,4-Difluor-5-chlor-6-methyl-pyrimidin | 2-Fluor-5-chlor-6-methyl-pyrimidin-4-yl | dito | rotorange |
| 36 | dito | 4,6-Difluor-5-chlor-2-methyl-pyrimidin | 6-Fluor-5-chlor-2-methyl-pyrimidin-4-yl | dito | rotorange |
| 37 | dito | 2,4,6-Trifluor-5-chlor-pyrimidin | 2,6-Difluor-5-chlor-pyrimidin-4-yl | dito | rotorange |

| Bsp. | Ausgangs- Verbindung (6) | Ausgangs- Verbindung (4) | Monoazoverbindung (1) Rest X- | Rest $-N(R)-(CH_2)_n-D-$ | Farbton ($\lambda_{max}$=...nm) |
|---|---|---|---|---|---|
| 38 | 4-Carboxy-1,3-diamino-benzol | 2,4-Difluor-5,6-dichlor-pyrimidin | 2-Fluor-5,6-dichlor-pyrimidin-4-yl | 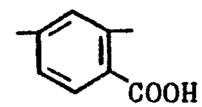 | rotorange |
| 39 | dito | 4,6-Difluor-2,5-dichlor-pyrimidin | 6-Fluor-2,5-dichlor-pyrimidin-4-yl | dito | rotorange |
| 40 | dito | 2,4-Difluor-5-chlor-6-methyl-pyrimidin | 2-Fluor-5-chlor-6-methyl-pyrimidin-4-yl | dito | rotorange |
| 41 | dito | 4,6-Difluor-5-chlor-2-methyl-pyrimidin | 6-Fluor-5-chlor-2-methyl-pyrimidin-4-yl | dito | rotorange |
| 42 | dito | 2,4,6-Trifluor-5-chlor-pyrimidin | 2,6-Difluor-5-chlor-pyrimidin-4-yl | dito | rotorange |
| 43 | 3-Carboxy-1,4-diamino-benzol | 2,4-Difluor-5,6-dichlor-pyrimidin | 2-Fluor-5,6-dichlor-pyrimidin-4-yl | 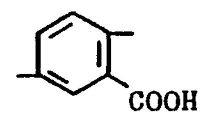 | rotorange |
| 44 | dito | 4,6-Difluor-2,5-dichlor-pyrimidin | 6-Fluor-2,5-dichlor-pyrimidin-4-yl | dito | rotorange |
| 45 | dito | 2,4-Difluor-5-chlor-6-methyl-pyrimidin | 2-Fluor-5-chlor-6-methyl-pyrimidin-4-yl | dito | rotorange |

| Bsp. | Ausgangs-Verbindung (6) | Ausgangs-Verbindung (4) | Monoazoverbindung (1) Rest X- | Rest $-N(R)-(CH_2)_n-D-$ | Farbton ($\lambda_{max}$=...nm) |
|---|---|---|---|---|---|
| 46 | dito | 4,6-Difluor-5-chlor-2-methyl-pyrimidin | 6-Fluor-5-chlor-2-methyl-pyrimidin-4-yl | dito | rotorange |
| 47 | dito | 2,4,6-Trifluor-5-chlor-pyrimidin | 2,6-Difluor-5-chlor-pyrimidin-4-yl | dito | rotorange |
| 48 | 4-Amino-3-sulfo-benzylamin | 2,4,6-Trichlor-s-triazin | 2,6-Dichlor-s-triazin-4-yl | 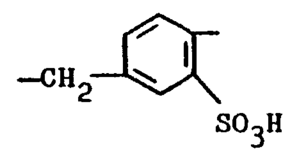 | rotorange |
| 49 | dito | 2,4-Difluor-5,6-dichlor-pyrimidin | 2-Fluor-5,6-di-chlor-pyrimidin-4-yl | dito | rotorange |
| 50 | dito | 2,4,6-Trifluor-5-chlor-pyrimidin | 2,6-Difluor-5-chlor-pyrimidin-4-yl | dito | rotorange |
| 51 | 1-Amino-(4'-amino-3'-sulfo-phenyl)-ethan | 2,4,6-Trichlor-s-triazin | 2,6-Dichlor-s-triazin-4-yl | 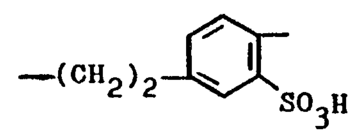 | rotorange |

## Ansprüche

1. Azoverbindung entsprechend der allgemeinen Formel (1)

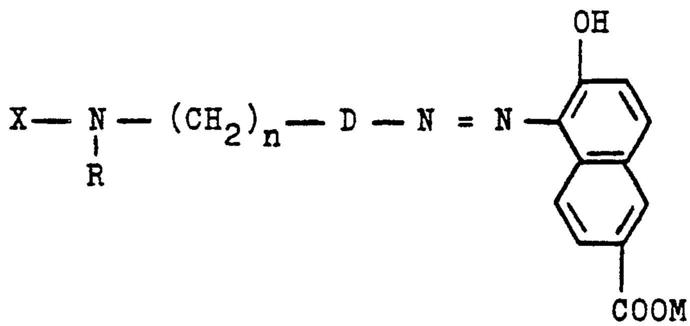

(1)

in welcher bedeuten:
D ist eine para- oder meta-Phenylen-Gruppe, die beide durch 1 Carboxygruppe oder 1 oder 2 Sulfogruppen substituiert sein können, oder ist eine Naphthylengruppe, die in 1- oder 2-Stellung die Azogruppe gebunden enthält und an die in 5- oder 6-Stellung die Gruppierung X-N(R)-$(CH_2)_n$- gebunden ist und die durch 1 oder 2 Carboxygruppen oder 1 oder 2 Sulfogruppen substituiert sein kann;
R ist ein Wasserstoffatom oder eine Alkylgruppe von 1 bis 4 C-Atomen oder eine durch eine Cyano-, Carboxy-, Sulfo-, Sulfato- oder Phosphatogruppe substituierte Alkylgruppe von 1 bis 4 C-Atomen, bevorzugt ein Wasserstoffatom und die Methylgruppe;
n ist die Zahl Null, 1 oder 2, bevorzugt Null;
X ist als faserreaktiver Rest der Diazin-, Triazin-, Pyridin-, Pyrimidin-, Pyridazin-, Thiazin-, Oxazin-, Chinolin-, Phthalazin- oder Phenanthridin-Rest, die mindestens einen reaktiven Substituenten enthalten und die zusätzlich durch andere Substituenten substituiert sein können, die aus der Gruppe der folgenden Substituenten:
durch Alkyl- und/oder gegebenenfalls substituierte Arylreste substituierte Ammonium-, Hydrazinium- und Sulfoniumgruppen, Alkylsulfonyl-, Arylsulfonyl-, Azido-, Rhodanido-, Thio-, Alkylthio-, Arylthio-, Alkoxy-, Aryloxy-, Sulfinsäure- oder Sulfonsäuregruppen, wobei deren Alkylreste solche von 1 bis 4 C-Atomen sind und deren gegebenenfalls substituierte Arylreste bevorzugt Phenyl- und Naphthylreste sind, die durch 1, 2 oder 3 Substituenten, bevorzugt aus der Gruppe Alkyl von 1 bis 4 C-Atomen, Alkoxy von 1 bis 4 C-Atomen, Sulfo, Carboxy und Halogen, substituiert sein können,
ausgewählt sind, oder
X ist ein aliphatischer Reaktivrest;
M ist ein Wasserstoffatom oder ein Alkalimetall oder das Äquivalent eines zwei- oder dreiwertigen Metalls, bevorzugt ein Wasserstoffatom oder ein Alkalimetall.

2. Azoverbindung nach Anspruch 1, dadurch gekennzeichnet, daß X die 2,6-Difluor-5-chlor-pyrimidin-4-yl-, 2-Fluor-5-chlorpyrimidin-4-yl-, 2-Fluor-5-chlor-6-methyl-pyrimidin-4-yl-, 2-Fluor-5,6-dichlorpyrimidin-4-yl-, 6-Fluor-2,5-dichlorpyrimidin-4-yl- und insbesondere die 2,4-Dichlor-1,3,5-triazin-6-yl-Gruppe ist.

3. Azoverbindung nach Anspruch 1 oder 2, dadurch gekennzeichnet, daß sie mindestens eine Sulfogruppe enthält.

4. Azoverbindung nach Anspruch 1 oder 2, dadurch gekennzeichnet, daß D die meta- oder para-Phenylengruppe ist, die durch 1 oder 2 Sulfogruppen substituiert ist.

5. Azoverbindung nach mindestens einem der Ansprüche 1 bis 4, dadurch gekennzeichnet, daß R ein Wasserstoffatom ist.

6. Verbindung nach mindestens einem der Ansprüche 1 bis 5, dadurch gekennzeichnet, daß X die 2,4-Dichlor-1,3,5-triazin-6-yl-Gruppe ist.

7. Azoverbindung nach mindestens einem der Ansprüche 1 bis 5, dadurch gekennzeichnet, daß X die 2,6-Difluor-5-chlorpyrimidin-4-yl-Gruppe ist.

8. Verfahren zur Herstellung einer Azoverbindung der allgemeinen Formel (1), dadurch gekennzeichnet, daß man

a) eine Verbindung der allgemeinen Formel (3)

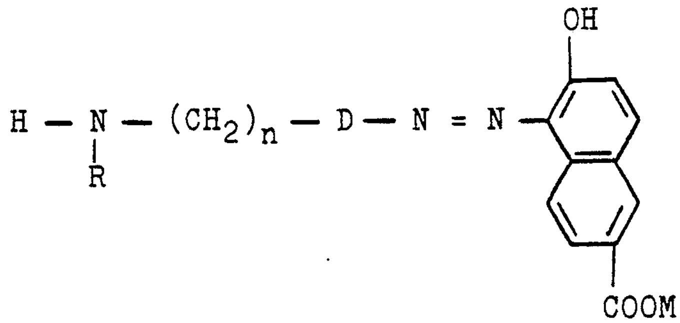

(3)

in welcher R, n, D und M die in Anspruch 1 genannten Bedeutungen haben (wobei hier im Falle D gleich Naphthylen die Gruppe $H-N(R)-(CH_2)_n-$ in 5- oder 6-Stellung des Naphthylens gebunden ist), in an und für sich bekannter Verfahrensweise mit einer Verbindung der allgemeinen Formel (4)

$X - Z$ (4)

in welcher X die in Anspruch 1 genannte Bedeutung besitzt und Z ein als Anion abspaltbarer Substituent, insbesondere ein Halogenatom ist, umsetzt, oder daß man

b) eine aromatische Aminoverbindung der allgemeinen Formel (5)

$X - \underset{R}{N} - (CH_2)_n - D - NH_2$ (5)

in welcher X, R, n und D die in Anspruch 1 genannten Bedeutungen haben (wobei hier im Falle D gleich Naphthylen die Aminogruppe $-NH_2$ in 1- oder 2-Stellung des Naphthylens gebunden ist), diazotiert und mit der 2-Naphthol-6-carbonsäure oder einem Salz dieser Carbonsäure kuppelt.

9. Verwendung einer Azoverbindung gemäß der nach Anspruch 1 genannten und definierten allgemeinen Formel (1) oder einer gemäß Anspruch 8 hergestellten Azoverbindung der Formel (1) als Farbstoff, insbesondere zum Färben von hydroxy- und/oder carbonamidgruppenhaltigem Material, vorzugsweise Fasermaterial.

10. Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme oder mittels einer säurebindenden Verbindung fixiert, dadurch gekennzeichnet, daß man als Farbstoff eine Azoverbindung entsprechend der gemäß Anspruch 1 genannten und definierten allgemeinen Formel (1) einsetzt.

Patentansprüche für folgenden Vertragsstaat: ES

1. Verfahren zur Herstellung einer Azoverbindung entsprechend der allgemeinen Formel (1)

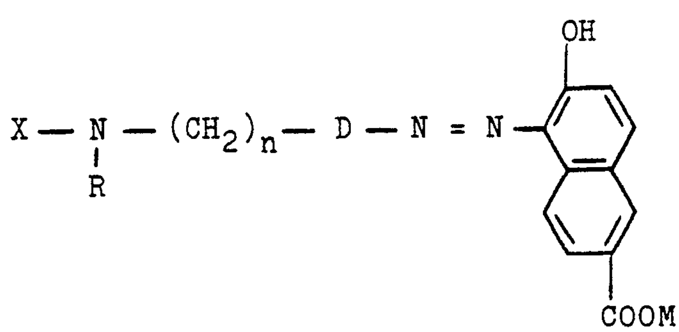

(1)

in welcher bedeuten:

D ist eine para- oder meta-Phenylen-Gruppe, die beide durch 1 Carboxygruppe oder 1 oder 2 Sulfogruppen

substituiert sein können, oder ist eine Naphthylengruppe, die in 1- oder 2-Stellung die Azogruppe gebunden enthält und an die in 5- oder 6-Stellung die Gruppierung $X-N(R)-(CH_2)_n-$ gebunden ist und die durch 1 oder 2 Carboxygruppen oder 1 oder 2 Sulfogruppen substituiert sein kann;
R ist ein Wasserstoffatom oder eine Alkylgruppe von 1 bis 4 C-Atomen oder eine durch eine Cyano-, Carboxy-, Sulfo-, Sulfato- oder Phosphatogruppe substituierte Alkylgruppe von 1 bis 4 C-Atomen, bevorzugt ein Wasserstoffatom und die Methylgruppe;
n ist die Zahl Null, 1 oder 2, bevorzugt Null;
X ist als faserreaktiver Rest der Diazin-, Triazin-, Pyridin-, Pyrimidin-, Pyridazin-, Thiazin-, Oxazin-, Chinolin-, Phthalazin- oder Phenanthridin-Rest, die mindestens einen reaktiven Substituenten enthalten und die zusätzlich durch andere Substituenten substituiert sein können, die aus der Gruppe der folgenden Substituenten:
durch Alkyl- und/oder gegebenenfalls substituierte Arylreste substituierte Ammonium-, Hydrazinium- und Sulfoniumgruppen, Alkylsulfonyl-, Arylsulfonyl-, Azido-, Rhodanido-, Thio-, Alkylthio-, Arylthio-, Alkoxy-, Aryloxy-, Sulfinsäure- oder Sulfonsäuregruppen, wobei deren Alkylreste solche von 1 bis 4 C-Atomen sind und deren gegebenenfalls substituierte Arylreste bevorzugt Phenyl- und Naphthylreste sind, die durch 1, 2 oder 3 Substituenten, bevorzugt aus der Gruppe Alkyl von 1 bis 4 C-Atomen, Alkoxy von 1 bis 4 C-Atomen, Sulfo, Carboxy und Halogen, substituiert sein können,
ausgewählt sind, oder
X ist ein aliphatischer Reaktivrest;
M ist ein Wasserstoffatom oder ein Alkalimetall oder das Äquivalent eines zwei- oder dreiwertigen Metalls, bevorzugt ein Wasserstoffatom oder ein Alkalimetall, dadurch gekennzeichnet, daß man

a) eine Verbindung der allgemeinen Formel (3)

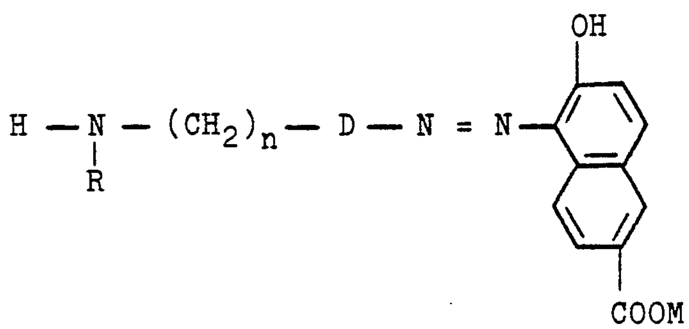

(3)

in welcher R, n, D und M die oben genannten Bedeutungen haben (wobei hier im Falle D gleich Naphthylen die Gruppe $H-N(R)-(CH_2)_n-$ in 5- oder 6-Stellung des Naphthylens gebunden ist), mit einer Verbindung der allgemeinen Formel (4)

$X - Z$ (4)

in welcher X die oben genannte Bedeutung besitzt und Z ein als Anion abspaltbarer Substituent, insbesondere ein Halogenatom ist, umsetzt, oder daß man

b) eine aromatische Aminoverbindung der allgemeinen Formel (5)

$X - \underset{R}{N} - (CH_2)_n - D - NH_2$ (5)

in welcher X, R, n und D die oben genannten Bedeutungen haben (wobei hier im Falle D gleich Naphthylen die Aminogruppe $-NH_2$ in 1- oder 2-Stellung des Naphthylens gebunden ist), diazotiert und mit der 2-Naphthol-6-carbonsäure oder einem Salz dieser Carbonsäure kuppelt.

2. Verfahren nach Anspruch 1, dadurch gekennzeichnet, daß X die 2,6-Difluor-5-chlor-pyrimidin-4-yl-, 2-Fluor-5-chlorpyrimidin-4-yl-, 2-Fluor-5-chlor-6-methyl-pyrimidin-4-yl-, 2-Fluor-5,6-dichlorpyrimidin-4-yl-, 6-Fluor-2,5-dichlorpyrimidin-4-yl- und insbesondere die 2,4-Dichlor-1,3,5-triazin-6-yl-Gruppe ist.

3. Verfahren nach Anspruch 1 oder 2, dadurch gekennzeichnet, daß die Verbindung (1) bzw. deren Ausgangsverbindungen (3) und/oder (4) oder (5) mindestens eine Sulfogruppe enthalten.

4. Verfahren nach Anspruch 1 oder 2, dadurch gekennzeichnet, daß D die meta- oder para-Phenylengruppe ist, die durch 1 oder 2 Sulfogruppen substituiert ist.

5. Verfahren nach mindestens einem der Ansprüche 1 bis 4, dadurch gekennzeichnet, daß R ein Wasserstoffatom ist.

6. Verfahren nach mindestens einem der Ansprüche 1 bis 5, dadurch gekennzeichnet, daß X die 2,4-Dichlor-1,3,5-triazin-6-yl-Gruppe ist.

7. Verfahren nach mindestens einem der Ansprüche 1 bis 5, dadurch gekennzeichnet, daß X die 2,6-Difluor-5-chlorpyrimidin-4-yl-Gruppe ist.

8. Verwendung einer Azoverbindung gemäß der nach Anspruch 1 genannten und definierten allgemeinen Formel (1) oder einer gemäß Anspruch 7 hergestellten Azoverbindung der Formel (1) als Farbstoff, insbesondere zum Färben von hydroxy- und/oder carbonamidgruppenhaltigem Material, vorzugsweise Fasermaterial.

9. Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme oder mittels einer säurebindenden Verbindung fixiert, dadurch gekennzeichnet, daß man als Farbstoff eine Azoverbindung entsprechend der gemäß Anspruch 1 genannten und definierten allgemeinen Formel (1) oder einer gemäß Anspruch 7 hergestellten Azoverbindung der Formel (1) einsetzt.